# EUROPEAN PATENT SPECIFICATION

(11) **EP 0 634 571 B1**
(45) Date of publication and mention of the grant of the patent: **16.08.2000**
(21) Application number: 94107642.4
(22) Date of filing: 17.05.1994
(51) Int. Cl.: F02F 1/42, F02B 31/00

(54) **Intake apparatus of diesel engine**
Einlassvorrichtung einer Dieselkraftmaschine
Dispositif d'admission d'un moteur diesel

(30) Priority: 18.05.1993 JP 14012693; 02.05.1994 JP 11598794
(43) Date of publication of application: 18.01.1995
(73) Proprietor: Mazda Motor Corporation, Aki-gun Hiroshima-ken (JP)
(72) Inventor: Sakimoto, Masatsugu, Hiroshima-ken (JP); Terazawa, Yasuyuki, Hiroshima-shi, Hiroshima-ken (JP); Yuzuriha, Yasuhiro, Hiroshima-shi, Hiroshima-ken (JP); Kashimoto, Masaaki, Hiroshima-shi, Hiroshima-ken (JP)
(74) Representative: Müller-Boré & Partner Patentanwälte

(56) References cited:
- DE-A- 2 017 877
- FR-A- 1 555 760
- FR-A- 2 152 198
- US-A- 3 832 983

## Description

### BACKGROUND OF THE INVENTION

### Field of the Invention

The present invention relates to an intake apparatus of a diesel engine, and in particular, to an intake apparatus of a diesel engine having a plurality of intake ports in each of cylinders, all of the intake ports being straight ports and the incidence angles of the intake ports on the surface orthogonal to the cylinder axial line being provided in the directions along the tangential lines of the cylinders.

### Description of the Related Art

There is known a diesel engine in which two intake ports are provided in each of the cylinders so as to improve volumetric efficiency and the intake ports are arranged so that the intake airs from the respective intake ports flow into the cylinder bore in the same directions so as to improve fuel combustion by causing swirl flow.

In the conventional diesel engine having two intake valves in each of the cylinders, one of the two intake ports is a helical port whose throat portion communicating with the cylinder bore is arranged to be spiral and the other of the two intake ports is a straight port whose throat portion is arranged to be straight and the incidence angle of the other intake port is provided in the direction along the tangential line of the cylinder. In this conventional diesel engine, the swirl ratio becomes high because of the one helical port and the volumetric efficiency decreases because of large flow resistance caused by the helical port.

Recently, the diesel engine has obtained an improved fuel combustion with a low swirl ratio since a fuel injection system is improved. Therefore, the diesel engine having high volumetric efficiency with a low swirl ratio has been demanded. In order to obtain much higher volumetric efficiency with the necessary low swirl ratio, a diesel engine has been proposed in which both of the intake ports are arranged to be straight and tangential.

Such diesel engine is disclosed for example in Japanese Utility Model Unexamined Publication No. 62-144. The diesel engine includes two intake ports in each of the cylinders, both of the intake ports being straight and tangential. Further, the one port arranged in the rear direction of the swirl flow is located near the intake edge surface of the cylinder head and the other port arranged in the front direction of the swirl flow is located far from the intake edge surface of the cylinder head.

However, though the diesel engine with two intake ports being both straight and tangential has been proposed as described above, the volumetric efficiency is not actually improved so much and the emission characteristics becomes bad because the fuel burns ununiformly.

Further, since the intake airs from the two straight ports flow into the cylinder bore in the same directions, a strong tumble flow is generated in the cylinder bore. The tumble flow exists and finally brakes at the top bottom center of compression stroke. As a result, since ununited air flow is generated in the combustion cavity and the fuel mist from the respective injection holes of the injection nozzle spread differently, the fuel burns ununiformly.

It is an object of the present invention to provide an intake apparatus of a diesel engine which improves the volumetric efficiency with obtaining necessary swirl ratio and the engine output and emission characteristics by prohibiting ununiform-fuel burning.

This object is achieved by an intake apparatus having the features disclosed in claim 1. Preferred embodiments are defined in the subclaims.

The intake apparatus of a diesel engine includes a plurality of intake ports provided in each of cylinders, the respective intake ports having throat portions which extend straightly to a cylinder bore of each of the cylinders, the respective intake ports being provided to be directed to the tangential line of the cylinder on the surface orthogonal to a cylinder axial line and to be directed in the same swirl flow directions, the intake ports including a front intake port located at the front side in the swirl flow direction and a rear intake port located at the rear side in the swirl flow direction, wherein the front intake port and the rear intake port are provided so that velocity distribution of the intake air from the front intake port is more directed to the swirl direction than that from the rear intake port.

The front and rear intake ports are provided so that an incidence angle against a surface orthogonal to a cylinder axial line of the front intake port is smaller than that of the rear intake port.

In a preferred embodiment of the present invention a length of the throat portion of the rear intake port is greater than that of the throat portion of the front intake port.

Preferably, the front and rear intake ports respectively include port axial line transition portions with respective predetermined radiuses of curvature which are provided on port axial lines of the throat portions and near the intersection points of port axial lines and valve axial lines of the front and rear intake ports, said predetermined radius of curvature of the port axial line transition portion of the front intake port being provided to be smaller than that of the rear intake port.

The above and other objects and features of the present invention will be apparent from the following description made with reference to the accompanying drawings relating to preferred embodiments of the present invention.

### BRIEF DESCRIPTION OF THE DRAWINGS

In the accompanying drawings:
Figure 1 is a schematic plain sectional view showing intake port arrangement of a cylinder head according to the present invention;
Figure 2 is a schematic vertical sectional view showing intake port arrangement of the cylinder head of Figure 1;
Figure 3 is a bottom end view showing the cylinder head of Figure 1;
Figure 4 is a view, partially in cross-section, showing the cylinder head assembled of Figure 1;
Figure 5 is a bottom end view showing a cylinder head according to another example of the present invention;
Figure 6 is a schematic vertical sectional view for explaining main flow directions of intake airs from the intake ports
Figure 7 is a schematic plan view showing tumble flows generated in the cylinder bore;
Figure 8 is a schematic plain sectional view showing intake port arrangement of a cylinder head according to the present invention; and
Figure 9 is a schematic vertical sectional view taken along the port axial lines of the respective intake ports showing intake port arrangement of the cylinder head of Figure 8.

### DETAILED DESCRIPTION OF THE PREFERRED EMBODIMENTS

The present invention will now be explained with reference to preferred embodiments and the drawings.

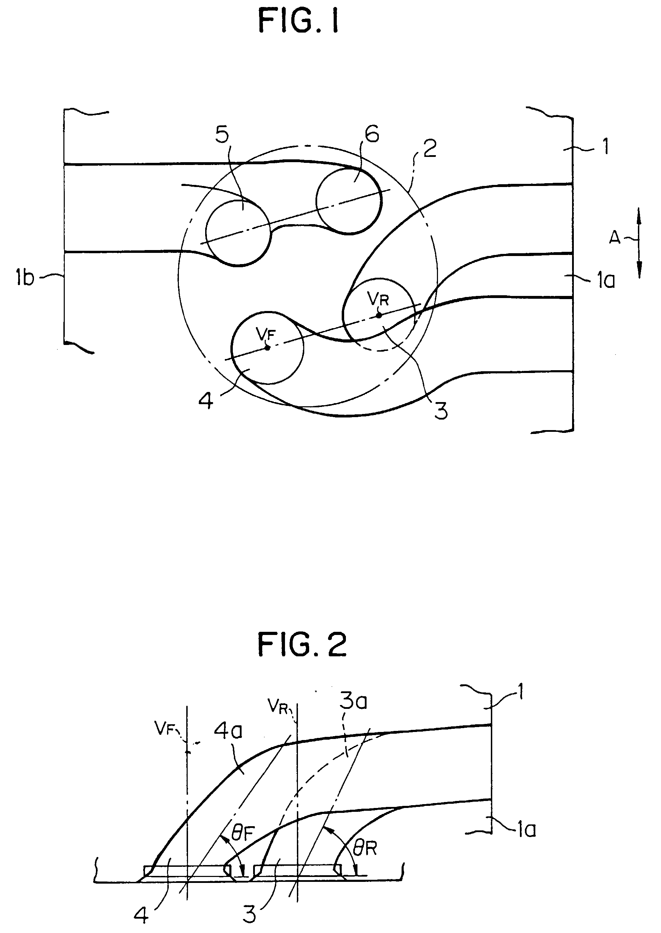

As shown in Figures 1 and 2, a diesel engine includes a cylinder head 1 and a plurality of cylinders (only one cylinder is shown in Figure 1). Each of the cylinders has a cylinder bore 2. The cylinder head 1 is provided with two intake ports 3 and 4, both of which extend from one end surface of the cylinder head 1 and communicate with the cylinder bore 2, and two exhaust ports 5 and 6 both of which extend from the other end surface and communicated with the cylinder bore 2. The intake port 3 communicates with the bore 2 at the location near an intake side end surface 1a of the cylinder head 1 against a cylinder line direction indicated by A in Figure 1, and the intake port 4 communicates with the bore 2 at the location near an exhaust side end surface 1b of the cylinder head 1. The exhaust port 5 communicates with the bore 2 at the location near the exhaust side end surface 1b of the cylinder head 1 against the cylinder line direction indicated by A in Figure 1, and the exhaust port 6 communicates with the bore 2 at the location near the intake side end surface 1a of the cylinder head 1. Further, opening portions of the intake ports 3 and 4 communicating with the cylinder bore 2 are located adjacently, and opening portions of the exhaust ports 5 and 6 communicating with the cylinder bore 2 are also located adjacently.

Both of the two intake ports 3 and 4 are straight ports whose throat portions 3a and 4a communicating with the cylinder bore 2 are provided so as to be straight. The intake air in the intake ports 3 and 4 flow into the cylinder bore 2 in the tangential direction on the surfaces orthogonal to the cylinder axial lines V_{R} and V_{F}, and the incidence angles of the intake ports 3 and 4 against the surfaces orthogonal to the cylinder axial lines V_{R} and V_{F} are provided so that the incidence angle θ_{R} of the intake port 3 (hereinafter called rear intake port 3) located at the rear side in the swirl flow direction is greater than the incidence angle θ_{F} of the intake port 4 (hereinafter called front intake port 4) located at the front side in the swirl flow direction. Thus, the rear intake ports 3 and the front intake port 4 generate swirl flow in the cylinder bore 2 by the intake airs in the both ports 3 and 4 flowing into the cylinder bore 2 in the clockwise direction in Figure 1. Here, the front intake port 4 with the small incidence angle θ_{F} compensates the decrease in the swirl ratio which is caused by the rear intake port 3 with the great incidence angle θ_{R}. The length of the throat portion 3a is the same as that of the throat portion 4a.

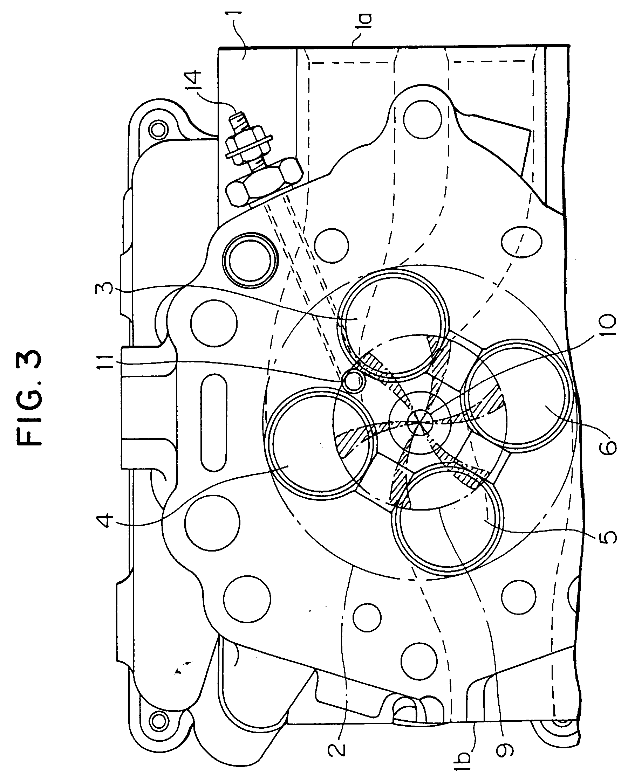

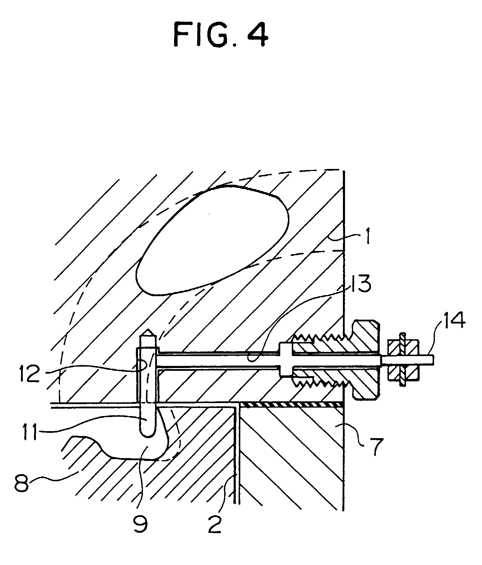

Figure 3 is a bottom view of the cylinder head 1, and Figure 4 is a view, partially in cross-section, showing a cylinder head 1 assembled.

Referring to Figures 3 and 4, a cylinder block 7 is disposed under the cylinder head 1, a piston 8 is inserted into the cylinder head 1, and a combustion cavity 9 provided on the top of the piston 8.

A fuel injection nozzle 10 with multiple holes is disposed in the cylinder head 1, facing the center of the combustion cavity 9 of the piston 8. A glow plug hole 12 is provided in the cylinder head 1 so that a glow plug 11 is arranged at inner side of the combustion cavity 9 and is able to be attached from the bottom side of the cylinder head 1, and a terminal hole 13 is provided in the cylinder head 1 to extend outwardly from the glow plug hole 12. The glow plug 11 is inserted into the glow plug hole 12 from the bottom side of the cylinder head 1 and a terminal plug 14 is inserted into the terminal hole 13 from the cylinder head 1 side. Fuel mists injected from the fuel injection nozzle 10 are designated as B in Figure 3.

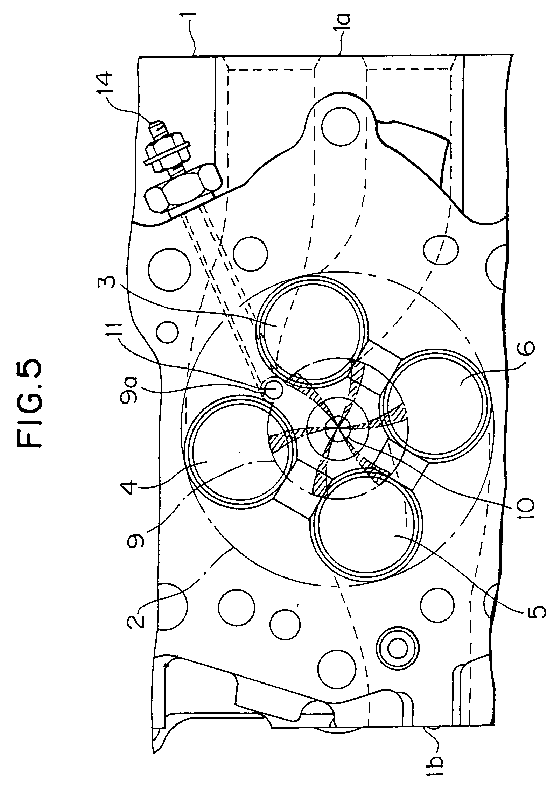

Referring to Figure 5, where the glow plug 11 is arranged at out side of the combustion cavity 9, the combustion cavity 9 is provided with a protruding portion 9a into which the glow plug 11 is inserted.

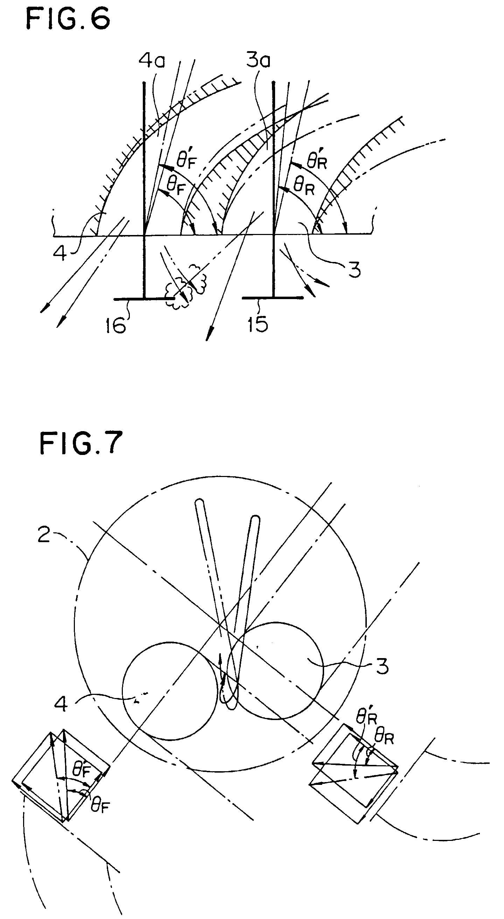

Referring to Figure 6, since the incidence angle θ_{R} of the rear intake port 3 is provided to be great and the front incidence angle θ_{F} of the intake port 4 is provided to be small, the intake air of the rear intake port 3 flows into the cylinder bore 2 more downwardly than that of the front intake port 4 as shown by the solid lines. As a result, when the rear intake air of the intake port 3 passes the intake valve 15, the intake air of the rear intake port 3 is spread less than that of the front intake port 4. Thus, the interference between the intake airs of the intake ports 3 and 4 can be decreased when both of the intake airs pass the intake valves 15 and 16, and further the intake air of the rear intake port 3 bumps rarely against the intake valve 16 of the front intake port 4. As a result, the volumetric efficiency of the diesel engine is increased with obtaining necessary swirl ratio.

In Figure 6, the two-dot chain line designates the configurations of the conventional intake ports whose incidence angles θ'_{F} and θ'_{R} are the same and the main flow directions of the intake airs from the intake ports. In this case as shown by the two-dot chain line, the interference between the intake air flows of the both intake ports occurs and the intake air flow from the intake port located at the rear side bumps against the intake valve of the intake port located at the front side much more than the embodiment of the invention as shown above.

Further, where the incidence angle θ_{R} of the rear intake port 3 is provided to be great and the incidence angle θ_{F} of the front intake port 4 is provided to be small and therefore the main flow directions of the intake airs from the intake ports 3 and 4 are different each other, the vector components in the cylinder axial lines V_{R} and V_{F} of the intake air flows from the intake ports 3 and 4 are different each other as shown in Figure 7. As a result, the strong tumble flow is prohibited from being generated, and the tumble flow as shown by the solid line arrow in Figure 7 does not coincide with the cylinder center and therefore the tumble flow does not exist in a long period. On the contrary, in the above-mentioned conventional case, where the incidence angles θ'_{R} and θ'_{F} of the intake ports 3 and 4 are the same, the vector components in the cylinder axial lines V_{R} and V_{F} of the intake air flows of the intake ports 3 and 4 are the same. As a result, in the conventional case, the strong tumble flow generated with ease and the tumble flow coincides with the cylinder center as shown in Figure 7, and therefore the tumble flow exists in a long period or by near the top dead center of the compression stroke. In this conventional case, the tumble flow is broken near the top dead center of the compression stroke and, therefore the air flow in the combustion cavity becomes ununiform and then ununiform burning occurs. However, according to the first embodiment of the present invention, such ununiform burning can be prohibited, and therefore bad emission characteristics can be prohibited.

On the other hand, since the rear intake port 3 is provided at the location near the intake end surface 1a of the cylinder head 1 and the front intake port 4 is provided at the location far from the intake end surface 1a of the cylinder head 1 against the cylinder line direction, the respective intake ports 3 and 4 are disposed very easily. Further, since the curvatures of the intake ports 3 and 4 are provided to be small, the fluid resistance caused by the ports 3 and 4 becomes small and the cylinder head 1 is manufactured easily. Moreover, the glow plug 11 is able to be attached from the bottom surface of the cylinder head 1.

According to a preferred embodiment of the present invention, the length of the throat portion 3a of the rear intake port 3 is provided to be longer than the length of the throat portion 4a of the front intake port 4. Further, according to the present invention, an intake apparatus of a diesel engine may be provided in which the incidence angle θ_{R} against the surface orthogonal against the cylinder axial line V_{R} of the rear intake port 3 is provided to be greater than the incidence angle θ_{F} of the front intake port 4 and the length of the throat portion 3a of the rear intake port 3 is further provided to be longer than the length of the throat portion 4a of the front intake port 4.

Thus, since the intake air from the rear intake port 3 has larger inertial force than that from the front intake port 4, the intake air from the rear intake port 3 flows more downwardly than that from the front intake port 4 and, therefore, the intake air from the rear intake port 3 does not spread so much at the intake valve for the rear intake port 3. As a result, the interference between the intake airs from the intake ports 3 and 4 is reduced, and the intake air from rear the intake port 3 rarely bumps against the intake valve for the front intake port 4. Finally, the volumetric efficiency of the diesel engine is increased with obtaining necessary swirl ratio according to the second embodiment of the present invention.

Further, since the main flow directions of the intake airs from the intake ports 3 and 4 are different each other, the strong tumble is prohibited from being generated. Moreover, and the tumble flow does not coincide with the cylinder center and, therefore, the tumble flow does not exist in a long period. As a result, above-mentioned ununiform air flow in the combustion cavity and ununiform burning can be prohibited, and therefore bad emission characteristics can be prohibited

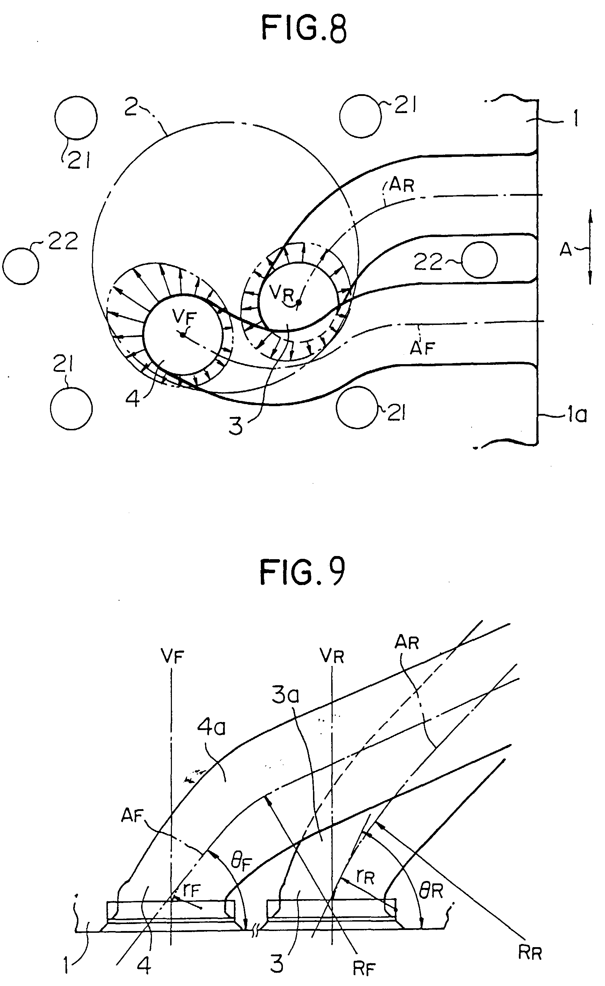

Next, the present invention will be explained with reference to Figures 8 and 9.

As shown in Figures 8 and 9, a diesel engine includes a cylinder head 1 and a plurality of cylinders (only one cylinder is shown in Figures 8 and 9). Each of the cylinders has a cylinder bore 2. The cylinder head 1 is provided with two intake ports 3 and 4, both of which extend from one end surface of the cylinder head 1 and communicate with the cylinder bore 2. The rear intake port 3 communicates with the bore 2 at the location near an intake side end surface 1a of the cylinder head 1 against a cylinder line direction indicated by A in Figure 9, and the front intake port 4 communicates with the bore 2 at the location near an exhaust side end surface 1b of the cylinder head 1. Further, opening portions of the intake ports 3 and 4 communicating with the cylinder bore 2 are located adjacently. The cylinder head 1 is provided with two exhaust ports (not shown) which are located adjacently.

As shown in Figure 8, vectors designated by arrows shows the velocity distributions or velocities and directions of the intake airs from the intake ports 3 and 4. Large head bolt holes 21 and small head bolt holes 22 are provided in the cylinder head 1. Those holes 21 and 22 are arranged not so as to interfere with the intake ports 3 and 4.

Both of the two intake ports 3 and 4 are straight ports whose throat portions 3a and 4a communicating with the cylinder bore 2 are provided so as to be straight. The intake airs in the intake ports 3 and 4 flow into the cylinder bore 2 in the tangential direction on the surfaces orthogonal to the cylinder axial lines V_{R} and V_{F}, and the incidence angles of the intake airs from the intake ports 3 and 4 against the surfaces orthogonal to the cylinder axial lines V_{R} and V_{F} are provided so that the incidence angle θ_{R} of the rear intake port 3 is greater than the incidence angle θ_{F} of the front intake port 4. Thus, the rear intake port 3 and the front intake port 4 generate swirl flow in the cylinder bore 2 by the intake airs in the both ports 3 and 4 flowing into the cylinder bore 2 in the clockwise direction in Figure 8.

As shown in Figure 9, the rear intake port 3 is provided wit a transition portion with radius of curvature r_{R} on the port axial line A_{R} of the throat portion 3a. The transition portion with radius of curvature r_{R} locates near the intersection point of the port axial line A_{R} of the throat portion 3a and the valve axial line V_{R} extending vertically through a center of an outlet opening of the rear intake port 3. The front intake port 4 is provided with a transition portion with radius of curvature r_{F} on the port axial line A_{F} of the throat portion 4a. The transition portion with radius of curvature r_{F} locates near the intersection point of the port axial line A_{F} of the throat portion 4a and the valve axial line V_{F} extending vertically through a center of an outlet opening of the front intake port 4. The radius of curvature r_{F} of the transition portion on the port axial line A_{F} of the throat portion 4a of the front intake port 4 is provided to be smaller than the radius of curvature r_{R} of the transition portion on the port axial line A_{R} of the throat portion 3a of the rear intake port 3. Further, the port axial line A_{F} of the throat portion 4a of the front intake port 4 is provided to be a substantially straight line, and the port axial line A_{R} of the throat portion 3a of the rear intake port 3 is provided to be a curve with radius of curvature R_{R} which is greater than the radius of curvature r_{R} of the transition portion of the throat portion 3a. Here, where Inner diameters of the transition portions of the ports 3 and 4 on the surfaces orthogonal to the port axial lines A_{R} and A_{F} are respectively 27 millimeter, the radius of curvature r_{R} is for example 16 millimeter and the radius of curvature r_{F} is for example 7.5 millimeter. The center of the radius of curvature r_{R} locates at the outside of the rear intake port 3, and the center of the radius of curvature r_{F} locates at the inside of the front intake port 4. The radius of curvature R_{R} is for example about 100 millimeter. The port axial line A_{F} of the throat portion 4a of the intake port 4 has it's upstream portion whose radius of curvature R_{F} (for example R_{F} is 45 millimeter) which is smaller than the radius of curvature R_{R} of the throat portion 3a of the rear intake port 3. The rear intake port 3 may be provided so that the port axial line A_{R} of the throat portion 3a is a substantial straight line instead of the curve with the radius of curvature R_{R} mentioned above.

According to the present invention shown in Figures 8 and 9, since the incidence angle θ_{R} of the rear intake port 3 is provided to be great and the incidence angle θ_{F} of the front intake port 4 is provided to be small, the intake port 4 causes a strong swirl flow and the intake air from the rear intake port 3 has larger inertial force along the cylinder axial line V_{R} than that from the front intake port 4. Thus, the intake air from the rear intake port 3 flows more downwardly than that from the front intake port 4 and, therefore, the intake air from the rear intake port 3 does not spread so much at the intake valve in comparison with that from the front intake port4. As a result, the interference between the intake airs from the intake ports 3 and 4 is reduced and the intake air from the rear intake port 3 rarely bumps against the intake valve for the front intake port 4. Finally, the volumetric efficiency of the diesel engine is increased.

Further, according to the present invention, since the main flow directions of the intake airs from the intake ports 3 and 4 are different each other and therefore the main flow directions of the intake airs from the intake ports 3 and 4 after bumping against the piston are different each other, the strong tumble flow is prohibited from being generated. Moreover, since the main flow directions of the intake ports 3 and 4 are different each other and therefore vector components of the intake airs of the intake ports 3 and 4 in the cylinder center direction are different each other, the rotation surface of the tumble flow does not coincide with the cylinder center and therefore the tumble flow does not exist in a long period.

On the other hand, if the tumble flow exists in a long period and is broken near the top dead center of the compression stroke which is a time of the fuel injection, the air flow in the combustion cavity becomes ununiform and then ununiform burning occurs. However, according to the invention, such ununiform air flow in the combustion cavity and ununiform burning can be prohibited, and therefore bad emission characteristics can be prohibited.

Since the rear intake port 3 is provided with the transition portion with the radius of curvature r_{R} on the port axial line A_{R} of the throat portion 3a near the intersection point of the port axial line A_{R} and the valve axial line V_{R} and the front intake port 4 is provided with the transition portion with the radius of curvature r_{F} on the port axial line A_{F} of the throat portion 4a near the intersection point of the port axial line A_{F} and the valve axial line V_{F}, the port axial lines A_{R} and A_{F} are connected smoothly with the valve axial lines V_{R} and V_{F} in the openings of the port outlets. Further, since the transition portion with the small radius of curvature r_{F} is provided in the front intake port 4, the main flow direction of the intake air from the front intake port 4 is prohibited from deflecting to the direction of the valve axial line V_{F} on the transition portion thereof. As a result, the swirl flow is generated effectively by the front intake port 4 with the small incidence angle θ_{F}.

While the present invention has been illustrated by means of several preferred embodiments, one of ordinary skill in the art will recognize that modifications and improvements can be made. The scope of the invention is determined solely by the appended claims.

## Claims

1. An intake apparatus of a diesel engine including
a plurality of intake ports (3, 4) provided in each cylinder, wherein
the respective intake ports (3, 4) having throat portions (3a; 4a) which extend substantially straightly to a cylinder bore (2) of each cylinder,
the respective intake ports (3, 4) being provided to be directed to the tangential line of the cylinder on the surface orthogonal to a cylinder axial line (V_{F}, V_{R}) and to be directed in the same swirl flow direction,
the intake ports (3, 4) including a front intake port (4) located at the front side in the swirl flow direction, and a rear intake port (3) located at the rear side in the swirl flow direction,
characterized in that
the front intake port (4) and the rear intake port (3) are provided so that velocity distribution of the intake air from the front intake port (4) is more directed to the swirl direction than that from the rear intake port (3),
said front and rear intake ports (3, 4) are provided so that an incidence angle (θ_{F}) against a surface orthogonal to the cylinder axial line (V_{F}) of the port axial line of the front intake port (4) is smaller than that (θ_{R}) of the rear intake port (3),
said throat portions (3a, 4a) of the front and rear intake ports (3, 4) are respectively provided with upstream portions having their port axial lines (A_{F}, A_{R}) with respective predetermined radiuses of curvature (R_{F}, R_{R}), said predetermined radius of curvature (R_{F}) of the front intake port (4) being smaller than said predetermined radius of curvature (R_{R}) of the rear intake port (3).

2. An intake apparatus of a diesel engine according to claim 1, wherein said throat portions (3a, 4a) further respectively include transition portions having their port axial lines with respective predetermined radiuses of curvature (r_{F}, r_{R}) which locate near intersection points of port axial lines (A_{F}, A_{R}) of the throat portions (3a, 4a) and the cylinder axial lines (V_{F}, V_{R}) to connect said port axial lines (A_{F}, A_{R}) smoothly,
said predetermined radius of curvature (r_{F}) of the transition portion of the front intake port (4) being smaller than that (r_{R}) of the rear intake port (3).

3. An intake apparatus of a diesel engine according to claim 1 or 2, wherein said predetermined radius of curvature (R_{R}) of the rear intake port (3) is provided to be greater than said predetermined radius of curvature (r_{R}) of the transition portion of the rear intake port (3).

4. An intake apparatus of a diesel engine according to one of the preceding claims, wherein said front and rear intake ports (3, 4) are provided adjacently so that an outlet opening of the rear intake port (3) is near an intake side end surface (1a) of a cylinder head (1) and an outlet opening of the front intake port (4) is far from the intake side end surface (1a) of the cylinder head (1).

5. An intake apparatus of a diesel engine according to one of thr preceding claims, wherein said cylinder head (1) is provided with a glow plug insert hole (12) through which a glow plug (11) is able to be inserted from a bottom surface of the cylinder head (1).

6. An intake apparatus of a diesel engine according to one of the preceding claims, wherein said front and rear intake ports (3, 4) are provided so that a length (L_{R}) of the throat portion (3a) of the rear intake port (3) is greater than that (L_{F}) of the throat portion (4e) of the front intake port (4).

7. An intake apparatus of a diesel engine according to one of the preceding claims, wherein the port axial lines (A_{F}, A_{R}) of the throat portions (4a, 3a) of the front and rear intake ports (4, 3) are respectively provided to be substantially straight.

## Patentansprüche

1. Einlaßvorrichtung eines Dieselmotors mit
einer Vielzahl von Einlaßöffnungen bzw. -kanälen (3, 4) in jedem Zylinder, wobei die jeweiligen Einlaßkanäle (3, 4) Lufttrichter- bzw. Halsabschnitte (3a; 4a) aufweisen, die sich im wesentlichen gerade zu einer Zylinderbohrung (2) jedes Zylinders erstrecken,
wobei die jeweiligen Einlaßkanäle (3, 4) so vorgesehen sind, daß sie zu der tangentialen Linie des Zylinders an der zu einer Zylinderachse (V_{F}, V_{R}) orthogonalen Fläche gerichtet sind und daß sie in derselben Drall- bzw. Wirbelströmungsrichtung gerichtet sind,
wobei die Einlaßkanäle (3, 4) einen vorderen Einlaßkanal (4), welcher an der Frontseite in der Wirbelströmungsrichtung gelegen ist, und einen hinteren Einlaßkanal (3) beinhalten, welcher an der Rückseite in der Wirbelströmungsrichtung gelegen ist,
dadurch gekennzeichnet, daß
der vordere Einlaßkanal (4) und der hintere Einlaßkanal (3) derart vorgesehen sind, daß eine Geschwindigkeitsverteilung der Einlaßluft von dem vorderen Einlaßkanal (4) mehr zu der Verwirbelungsrichtung gerichtet ist als diejenige des hinteren Einlaßkanals (3), wobei die vorderen und hinteren Einlaßkanäle (3, 4) so vorgesehen sind, daß ein Einfallwinkel θ_{F} gegenüber einer zu der Zylinderachsenlinie V_{F} der axialen Kanallinie des Fronteinlaßkanals (4) orthogonalen Fläche geringer ist als derjenige (θ_{R}) des hinteren Einlaßkanals (3),
wobei die Halsabschnitte (3a, 4a) der vorderen und hinteren Einlaßkanäle (3, 4) jeweils mit stromaufwärtigen Abschnitten versehen sind, deren axiale Kanallinien (A_{F}, A_{R}) jeweils vorbestimmte Krümmungsradien (R_{F}, R_{R}) aufweisen, wobei der vorbestimmte Krümmungsradius (R_{F}) des vorderen Einlaßkanals (4) geringer ist als der vorbestimmte Krümmungsradius (R_{R}) des hinteren Einlaßkanals (3).

2. Einlaßvorrichtung eines Dieselmotors gemäß Anspruch 1, bei welcher die Halsabschnitte (3a, 4a) ferner jeweils Übergangsabschnitte beinhalten, bei denen die axialen Kanallinien jeweils vorbestimmte Krümmungsradien (r_{F}, r_{R}) haben, welche nahe Schnittpunkten der axialen Kanallinien (A_{F}, A_{R}) der Halsabschnitte (3a, 4a) und der axialen Zylinderlinien (V_{F}, V_{R}) liegen, um die axialen Kanallinien (A_{F}, A_{R}) glatt bzw. gleichmäßig zu verbinden,
wobei ein vorbestimmter Krümmungsradius (r_{F}) des Übergangsabschnittes des vorderen Einlaßkanals (4) kleiner als derjenige (r_{R}) des hinteren Einlaßkanals (3) ist.

3. Einlaßvorrichtung eines Dieselmotors gemäß Anspruch 1 oder 2, bei welcher der vorbestimmte Krümmungsradius (R_{R}) des hinteren Einlaßkanals (3) vorgesehen ist, größer zu sein als der vorbestimmte Krümmungsradius (r_{R}) des Übergangsabschnittes der hinteren Einlaßkanals (3).

4. Einlaßvorrichtung eines Dieselmotors gemäß einem der vorangehenden Ansprüche, bei welcher die vorderen und hinteren Einlaßkanäle (3, 4) angrenzend vorgesehen sind, so daß eine Auslaßöffnung des hinteren Einlaßkanals (3) nahe einer Einlaßseitenend- bzw. -stirnfläche (1a) eines Zylinderkopfes (1) und eine Auslaßöffnung des vorderen Einlaßkanals (4) entfernt von der Einlaßseitenstirnfläche (1a) des Zylinderkopfes (1) gelegen ist.

5. Einlaßvorrichtung eines Dieselmotors gemäß einem der vorangehenden Ansprüche, bei welcher der Zylinderkopf (1) mit einem Glühkerzen-Einsatzloch (12) vorgesehen ist, durch welches eine Glühkerze (11) von einer Bodenfläche des Zylinderkopfes (1) eingesetzt werden kann.

6. Einlaßvorrichtung eines Dieselmotors gemäß einem der vorangehenden Ansprüche, bei welcher die vorderen und hinteren Einlaßkanäle (3, 4) derart vorgesehen sind, daß eine Länge (L_{R}) des Halsabschnittes (3a) des hinteren Einlaßkanals (3) größer ist als diejenige (L_{F}) des Halsabschnittes (4e) des vorderen Einlaßkanals (4).

7. Einlaßvorrichtung eines Dieselmotors gemäß einem der vorangehenden Ansprüche, bei welcher die axialen Kanallinien (A_{F}, A_{R}) der Halsabschnitte (4a, 3a) der vorderen und hinteren Einlaßkanäle (4, 3) jeweils vorgesehen sind, um im wesentlichen gerade zu sein.

## Revendications

1. Appareil d'admission de moteur diesel, comprenant :
plusieurs canaux d'admission (3, 4) disposés dans chaque cylindre, tels que
les canaux respectifs d'admission (3, 4) ont des parties de col (3a ; 4a) qui s'étendent en direction pratiquement rectiligne vers l'alésage (2) de chaque cylindre,
les canaux respectifs d'admission (3, 4) sont disposés afin qu'ils soient dirigés vers la tangente au cylindre à la surface perpendiculaire à une ligne axiale du cylindre (V_{F}, V_{R}) et soient dirigés avec une même direction du courant tourbillonnaire, et
les canaux d'admission (3, 4) comportent un canal d'admission avant (4) placé du côté avant dans la direction du courant tourbillonnaire et un canal d'admission arrière (3) placé du côté arrière dans la direction du courant tourbillonnaire,
caractérisé en ce que
le canal d'admission avant (4) et le canal d'admission arrière (3) sont disposés afin que la distribution de vitesse de l'air d'admission depuis le canal d'admission avant (4) soit plus dirigée dans la direction de tourbillonnement que celle du canal d'admission arrière (3),
les canaux d'admission avant et arrière (3, 4) sont disposés afin que l'angle d'incidence (θ_{F}) sur une surface perpendiculaire à la ligne axiale du cylindre (V_{F}) de la ligne axiale du canal d'admission avant (4) soit inférieur à l'angle (θ_{R}) du canal d'admission arrière (3), et
les parties de col (3a, 4a) des canaux d'admission avant et arrière (3, 4) sont munies respectivement de parties amont ayant des lignes axiales (A_{F}, A_{R}) de canaux possédant des rayons de courbure prédéterminés respectifs (R_{F}, R_{R}), le rayon de courbure prédéterminé (R_{F}) du canal d'admission avant (4) étant inférieur au rayon de courbure prédéterminé (R_{R}) du canal d'admission arrière (3).

2. Appareil d'admission de moteur diesel selon la revendication 1, dans lequel les parties de col (3a, 4a) comprennent en outre respectivement des parties de transition dont les lignes axiales de canaux ont des rayons prédéterminés respectifs de courbure (r_{F}, r_{R}) et qui sont placées près des points d'intersection des lignes axiales (A_{F}, A_{R}) des parties de col (3a, 4a) et des lignes axiales (V_{F}, V_{R}) des cylindres pour se raccorder progressivement aux lignes axiales (A_{F}, A_{R}) des canaux,
le rayon prédéterminé de courbure (r_{F}) de la partie de transition du canal d'admission avant (4) étant plus petit que le rayon (r_{R}) du canal d'admission arrière (3).

3. Appareil selon la revendication 1 ou 2, dans lequel le rayon prédéterminé de courbure (R_{R}) du canal d'admission arrière (3) est supérieur au rayon prédéterminé de courbure (r_{R}) de la partie de transition du canal d'admission arrière (3).

4. Appareil selon l'une quelconque des revendications précédentes, dans lequel les canaux d'admission avant et arrière (3, 4) sont adjacents afin qu'une ouverture de sortie du canal d'admission arrière (3) soit proche d'une surface d'extrémité du côté d'admission (1a) d'une culasse (1) et qu'une ouverture de sortie du canal d'admission avant (4) soit éloignée de la surface d'extremité du côté d'admission (1a) de la culasse (1).

5. Appareil selon l'une quelconque des revendications précédentes, dans lequel la culasse (1) a un trou (12) d'insertion de bougie de réchauffage par lequel une bougie de réchauffage (11) peut être insérée depuis une surface inférieure de la culasse (1).

6. Appareil selon l'une quelconque des revendications précédentes, dans lequel les canaux d'admission avant et arrière (3, 4) sont disposés afin que la longueur (L_{R}) de la partie de col (3a) du canal d'admission arrière (3) soit supérieure à la longueur (L_{F}) de la partie de col (4a) du canal d'admission avant (4).

7. Appareil selon l'une quelconque des revendications précédentes, dans lequel les lignes axiales (A_{F}, A_{R}) des parties de col (4a, 3a) des canaux d'admission avant et arrière (4, 3) sont disposées respectivement sous forme pratiquement rectiligne.
